(19) Europäisches Patentamt
European Patent Office
Office européen des brevets

(11) Publication number: **0 088 352**
**B1**

(12) # EUROPEAN PATENT SPECIFICATION

(45) Date of publication of patent specification: **16.01.85**

(51) Int. Cl.⁴: **C 01 B 33/28**

(21) Application number: **83102022.7**

(22) Date of filing: **02.03.83**

(54) **Synthesis process for high silica zeolites.**

(30) Priority: **03.03.82 US 354445**

(43) Date of publication of application:
**14.09.83 Bulletin 83/37**

(45) Publication of the grant of the patent:
**16.01.85 Bulletin 85/03**

(84) Designated Contracting States:
**AT BE CH DE FR GB IT LI NL SE**

(56) References cited:
**EP-A-0 011 362**
**EP-A-0 040 444**
**DE-B-2 830 787**

(73) Proprietor: **UNION CARBIDE CORPORATION**
**Old Ridgebury Road**
**Danbury Connecticut 06817 (US)**

(72) Inventor: **Mei-Tak Lok, Brent**
**17a Deerwood Drive**
**New City N. Y. 10956 (US)**
Inventor: **Flanigen, Edith Marie**
**502 Woodland Hills Road**
**White Plains N.Y. 10603 (US)**

(74) Representative: **Eggert, Hans-Gunther, Dr.**
**Räderscheidtstrasse 1**
**D-5000 Köln 41 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 088 352 B1

Courier Press, Leamington Spa, England.

## Description

The present invention relates in general to the hydrothermal synthesis of zeolites, and more particularly to the synthesis of high-silica aluminosilicate zeolites using reaction mixtures which contain organic nitrogenous bases and alkaline earth metal cations, but which are essentially free of alkali metal cations.

Zeolites having $SiO_2/Al_2O_3$ molar ratios of from 5 to 100 and having X-ray diffraction patterns similar to those prepared by the present process are disclosed in U.S.—patent specification 3,702,886 issued November 14, 1972 to R. J. Argauer et al. In the synthesis process of the aforesaid patent, tetrapropylammonium and sodium cations are both present in the reaction mixture in proportions such that the as-synthesized zeolites contain, typically, from 0.83 to 1.3 moles $Na_2O$ per mole of $Al_2O_3$.

Although the bulk of the zeolitic sodium can, after removal of the organic cation, be replaced with other cations by conventional ion-exchange techniques, complete removal of the sodium by this means is a very difficult undertaking, if not a practical impossibility. Since the presence of sodium may be undesirable if the zeolite is to be used in certain catalytic applications, it would be advantageous to be able to synthesize a zeolite of the ZSM-5 or related types which is substantially free of sodium cations. It would also be desirable to use less expensive raw materials than those used in prior art processes.

We have now discovered that essentially alkali metal-free aluminosilicate zeolites can be synthesized by the process which comprises:

(a) providing a substantially alkali metal-free reaction mixture having a composition in terms of the mole ratios of oxides as follows:

(i) about 10 to 190 moles of $SiO_2$ per mole of $Al_2O_3$;
(ii) about 0.04 to 0.5 moles of MO per mole of $SiO_2$;
(iii) about 20 to 600 moles of $H_2O$ per mole of MO;
(iv) about 1.0 to 10.0 moles of $R_2O$ per mole $Al_2O_3$;

wherein "M" is an alkaline earth metal cation having an atomic number above 12, and "R" is an alkylammonium cation; and

(b) maintaining said mixture under autogeneous pressure at a temperature of from about 100° to about 200°C until said zeolite is formed, usually for a period of from about 40 to about 200 hours.

The reagent sources of the oxides in formulating the aforesaid reaction mixtures are those conventional in zeolite synthesis. Representative alumina sources are activated alumina, gamma alumina and alumina trihydrate. Representative silica sources are silica gels, silicic acid, aqueous colloidal silica sols and solid reactive amorphous silicas. The alkaline earth metal oxides are preferably supplied in the hydroxide form. The alkylammonium cation is preferably supplied in the form of a bromide or hydroxide.

The crystalline zeolite product is readily isolated from the unreacted and/or water soluble components by filtration and subsequent washing with water. Dehydration to remove the intracrystalline adsorbed water and activate the zeolite is accomplished by calcination in air or in vacuum at temperatures of 200°C or more.

Detailed description of the invention

The crystalline zeolites, both naturally-occurring and synthetically prepared, are hydrated aluminosilicates whose structures are based on a theoretically limitless 3-dimensional network of $AlO_x$ and $SiO_y$ tetrahedra linked by the sharing of oxygen atoms. Zeolites are commonly represented by the empirical formula:

$$M_{2/n}O:Al_2O_3:aSiO_2:bH_2O$$

wherein n is the valence of the cation M, a is equal to or greater than 2, and b is a value dependent upon the adsorptive capacity of the particular zeolite for water, and the degree of hydration, usually in the range of about 0 to about 40. In the naturally-occurring, *i.e.*, mineral, zeolites the cation is usually a metal of the Group I or Group II elements, especially sodium, potassium, calcium, magnesium and strontium. In synthetic species, the cation in the as-synthesized form can be, in addition, ammonium or any of a variety of organic nitrogenous cations such as alkylammonium and aryl ammonium, although the use of some organic nitrogenous compounds involves the disadvantage of relatively high reactant costs. In general, the zeolite cations are at least partly exchangeable, although cation size and steric considerations for the crystal lattice sometimes preclude ion-exchange with or for certain cations, including the above-mentioned organic nitrogenous cations.

For reasons not fully understood, the type of zeolite species which crystallize from aluminosilicate gels depends strongly upon the cation species present therein. For example, gel compositions which produce zeolite A and zeolite X when sodium is the sole alkali metal present, produce zeolite F and zeolite P respectively when potassium is substituted for the sodium in the gel compositions. In other instances, changing the cation species in the gel compositions will produce a zeolite of the same crystal configuration, but will also create changes in the expected $SiO_2/Al_2O_3$ molar ratio of the zeolite product.

The crystalline aluminosilicate zeolites prepared in accordance with the practice of the present invention have a chemical composition expressed in terms of moles ratios of oxides as follows:

$$wMO:Al_2O_3:xSiO_2:yH_2O:zR_2O$$

wherein M represents an alkaline earth metal cation having an atomic number above 12, R represents an alkylammonium cation, w is within the range of about 0.1 to 2.0, x is within the range of about 10 to 190, y is within the range of about 0 to 40, and z is within the range of about 0.5 to 5.0. The zeolites may be exchanged with ammonium or other cations, including metal ions, hydrogen ions, rare earth ions and mixtures thereof, by contacting the zeolites with solutions containing the desired cations.

In conjunction with the aforesaid chemical composition, the zeolites of this invention possess a distinguishing crystalline structure characterized by an X-ray powder diffraction pattern having at least the following interplanar spacings.

TABLE A

| Interplanar spacing, d (Å) | Relative intensity |
|---|---|
| 11.1±0.2 | Strong |
| 10.0±0.2 | Strong |
| 3.85±0.05 | Very strong |
| 3.75±0.05 | Strong |
| 3.72±0.05 | Strong |

These values are determined by standard techniques. The radiation source was the K—$\alpha$ doublet of copper, and measurements were made using a scintillation-counter spectrometer with a strip-chart pen recorder. The peak intensities, I, and the peak or line positions, which are functions of two times theta ($\theta$), where theta is the Bragg angle, were read from the spectrometer chart. From these, the relative intensities and the interplanar spacings, d (in Angstroms), for the recorded lines were determined. In Table I the relative intensities are given in terms of numerical values which are equal to 100 times the ratio of the peak intensity, I, to the maximum intensity, $I_o$, in the spectrum. Strip chart peaks which appear as shoulders are indicated by the term "(sh)".

Ion-exchange of the original cation with other cation species does not substantially alter the X-ray pattern of the zeolite, but some minor shifts in interplanar spacing can occur. Other minor variations can occur depending on the silicon-to-aluminum ratio of the particular sample and whether or not the sample has been subjected to elevated temperatures. In any event, the d-spacings of the X-ray pattern will be within the tolerances indicated in Table A.

The zeolite compositions of the present invention are synthesized by preparing a substantially alkali metal free reaction mixture having a composition, in terms of mole ratios of oxides, approximately falling within the following ranges:

TABLE B

| Mole ratio | I | II |
|---|---|---|
| $SiO_2/Al_2O_3$ | 10—190 | 30—90 |
| $MO/SiO_2$ | 0.04—0.5 | 0.08—0.25 |
| $H_2O/MO$ | 20—600 | 80—500 |
| $R_2O/Al_2O_3$ | 1.0—10.0 | 1.0—2.0 |

wherein M represents an alkaline earth metal cation selected from Group IIA of the Periodic System of Elements and having an atomic number above 12. In a preferred embodiment, M is selected from the group consisting of barium, calcium and strontium, R represents an alkylammonium cation, preferably one in which the alkyl groups contain from 2 to 4 carbon atoms, most preferably tetrapropylammonium. Range I above represents the basic range of reactant compositions, whereas Range II is a preferred operating range for reasons of product purity and process economics.

The zeolite prepared by the present process has an effective pore diameter of about 6Å as determined by adsorption characterization. This pore size permits the separation of mixtures of certain organic compounds, as for example nonquaternary carbon-containing paraffins or olefins, from mixtures containing molecules which have quaternary carbon atoms. The zeolite is also useful in the separation of p-xylene from mixtures with o-xylene, m-xylene and ethylbenzene.

One separation process contemplated with the present zeolites includes the steps of contacting an aqueous solution or mixture, such as a waste water influent containing an organic compound, with the siliceous zeolitic aluminosilicate, adsorbing at least a portion of the organic compound on the inner adsorption surfaces of these molecular sieves and thereafter recovering, optionally as an effluent stream, the treated aqueous solution or mixture which exhibits a depleted organic compound content.

The following examples serve to illustrate the method of preparation and the adsorptive properties of the zeolite of the present invention.

Example 1

A reaction mixture was prepared by adding 8.2 grams of barium hydroxide ($Ba(OH)_2 \cdot 8H_2O$) and 1.8 grams of alumina ($Al_2O_3 \cdot H_2O$) in 50 grams of boiling water. The resulting mixture, which contained some undissolved constituents, was added to 182.8 grams of an aqueous colloidal silica sol (containing 30% by weight $SiO_2$) and 149.1 grams of water. To this was added a solution of 10.7 grams of tetrapropylammonium bromide (TPABr) in 23.8 grams of water. The mixture was stirred until homogeneous. The composition of the final reaction mixture in molar oxide ratios was:

$$2.25BaO:1.74\ (TPA)_2O:79.2\ SiO_2:1689\ H_2O:Al_2O_3$$

The reaction mixture was placed in a stainless steel pressure vessel lined with polytetrafluoroethylene, and heated in an oven at 150°C for 72 hours. The solid reaction product was recovered by filtration, washed with water, and dried at 110°C in air. A portion of the solid was submitted for X-ray analysis and chemical analysis, and was found to contain less than 400 ppm $Na_2O$, 7.6 wt.% C, 0.73 wt.% N, 82.9 wt.% $SiO_2$, 2.34 wt.% BaO and 1.66 wt.% $Al_2O_3$. The product composition in terms of molar oxide ratios (anhydrous basis) was:

$$Al_2O_3:1.62\ (TPA)_2O:0.94\ BaO:84.8\ SiO_2$$

The above product had an X-ray powder diffraction pattern characterized by the data given in Table I, wherein "I' is the intensity of the peak, "$I_o$" is the intensity of the peak maximum, such that 100 times $I/I_o$ is the percentage of relative intensity for that peak, and wherein "d" is the interplanar spacing.

A portion of the solid crystalline product was calcined in air at 600°C for two hours. The calcined product had an X-ray diffraction pattern similar to the uncalcined sample.

The adsorption capacities of the calcined product were measured using a standard McBain-Bakr gravimetric adsorption apparatus. The data, listed in Table II, was obtained for samples activated at 350°C.

Example 2

A reaction mixture was prepared by dissolving 8.2 grams of $Ba(OH)_2 \cdot 8H_2O$ and 1.8 grams of $Al_2O_3 \cdot 3H_2O$ in 50 grams of boiling water. This mixture was added to 68.6 grams of an aqueous colloidal silica sol (containing 30% by weight $SiO_2$) and with 229.1 grams of water. To this was added a solution of 10.7 grams TPABr in 23.8 grams of water. The mixture was stirred until homogeneous. The composition of the final reaction mixture in molar oxide ratios was:

$$2.25\ BaO:1.74\ (TPA)_2O:29.7\ SiO_2:1689\ H_2O:Al_2O_3$$

The reaction mixture was placed in a stainless steel pressure vessel, similar to the one used in Example 1, and heated in an oven at 150°C for 92.5 hours. The solid reaction product was recovered by filtration, washed with water, and dried at 110°C in air. A portion of the solid was submitted for X-ray analysis producing similar results to those in Example 1.

Example 3

A reaction mixture was formed by initially admixing 5.0 grams of strontium oxide (SrO) and 1.8 grams of $Al_2O_3 \cdot 3H_2O$ in 100 grams of boiling water. The mixture thus formed was added to 182.8 grams of an aqueous colloidal silica sol (containing 30% by weight $SiO_2$) diluted with 99 grams of water. To this was added a solution of 10.7 grams of TPABr in 23.8 grams of water. The mixture was stirred until homogeneous. The composition of the final reaction mixture in molar oxide ratios was:

$$4.18\ SrO:1.74\ (TPA)_2O:79.2\ SiO_2:1689\ H_2O:Al_2O_3$$

The reaction mixture was placed in stainless steel pressure vessel, similar to that in Example 1, and heated in an oven at 150°C for 72 hours. The solid reaction product was recovered by filtration, washed with water and dried at 110°C in air. A portion of the solid was submitted for X-ray analysis and chemical analysis, and was found to contain less than 400 ppm $Na_2O$, 7.3 wt.% C, 0.74 wt.% N, 81.3 wt.% $SiO_2$, 3.31 wt.% SrO and 1.75 wt.% $Al_2O_3$. The product composition in molar oxide ratios was determined to be:

$$Al_2O_3{:}1.47\ (TPA)_2O{:}1.86\ SrO{:}78.7\ SiO_2$$

This product had an X-ray powder diffraction pattern characterized by the data listed in Table I.

A portion of the solid crystalline product was calcined in air at about 600°C for two hours. The calcined product had an X-ray diffraction pattern similar to the uncalcined sample.

Adsorption capacities were measured for the calcined product, using the procedures as described in Example 1, with the results given in Table II.

Example 4

A reaction mixture was prepared by dissolving 1.29 grams of calcium oxide (CaO) and 1.8 grams of $Al_2O_3 \cdot 3H_2O$ in 50 grams of boiling water. This mixture was added to 184.9 grams of aqueous colloidal silica sol (containing 30% by weight $SiO_2$) diluted with 153 grams of water. To this was added a solution of 11.05 grams of TPABr in 23.8 grams of water. The mixture was stirred until homogeneous. The composition of the final reaction mixture in molar oxide ratios was:

$$2.0\ CaO{:}1.8\ (TPA)_2O{:}80\ SiO_2{:}1715\ H_2O{:}Al_2O_3$$

The reaction mixture was placed in a stainless steel pressure vessel, similar to the one used in Example 1, and heated in an oven at 150°C for 112.75 hours. The solid reaction product was recovered by filtration, washed with water, and dried at 110°C in air. A portion of the solid was submitted for X-ray analysis and chemical analysis, and found to contain less than 400 ppm $Na_2O$, 7.7 wt.% C, 85.3 wt.% $SiO_2$, 0.39 wt.% CaO and 1.7 wt.% $Al_2O_3$, giving a product composition in molar oxide ratios of:

$$Al_2O_3{:}1.6\ (TPA)_2O{:}0.42\ CaO{:}85.3\ SiO_2$$

This product had an X-ray powder diffraction pattern characterized by the data given in Table I.

A portion of the solid crystalline product was calcined in air at about 600°C for about two hours. The calcined product had an X-ray diffraction pattern similar to the uncalcined sample.

The adsorption capacities were measured from the calcined product, using the procedures established in Example 1, with the results shown in Table II.

TABLE I

| Example 1 | | | Example 3 | | | Example 4 | | |
|---|---|---|---|---|---|---|---|---|
| 2θ | d | I/Io (100×) | 2θ | d | I/Io (100×) | 2θ | d | I/Io (100×) |
| 8.05 | 10.98 | 30 | 7.9 | 11.19 | 37 | 7.9 | 11.19 | 30 |
| 8.9 | 9.94 | 36 | 8.8 | 10.05 | 29 | 8.8 | 10.05 | 48 |
| 9.15 | 9.66 | (sh) | 9.0 | 9.83 | (sh) | 9.1 | 9.72 | (sh) |
| 9.9 | 8.93 | 3 | 9.75 | 9.07 | 3 | 9.8 | 9.03 | 3 |
| 11.0 | 8.04 | 1 | 10.9 | 8.12 | 1 | 11.0 | 8.04 | 1 |
| 12.0 | 7.38 | 7 | 11.6 | 7.63 | (sh) | 11.9 | 7.44 | 9 |
| 12.6 | 7.03 | 4 | 11.85 | 7.47 | 8 | 12.5 | 7.08 | 5 |
| 13.3 | 6.66 | 3 | 12.45 | 7.11 | 4 | 13.2 | 6.71 | 3 |
| 14.0 | 6.33 | 6 | 13.15 | 6.73 | 3 | 13.9 | 6.37 | 6 |
| 14.75 | 6.01 | 7 | 13.85 | 6.39 | 9 | 14.6 | 6.07 | 7 |
| 14.9 | 5.95 | | 14.6 | 6.07 | 8 | 15.5 | 5.72 | 5 |
| 15.6 | 5.68 | 5 | 15.0 | 5.91 | | 15.9 | 5.57 | 6 |
| 16.0 | 5.54 | 6 | 15.45 | 5.74 | 7 | 16.5 | 5.37 | 1 |
| 16.6 | 5.34 | 1 | 15.9 | 5.57 | 7 | 17.3 | 5.13 | 3 |

TABLE I (contd.)

| Example 1 | | | Example 3 | | | Example 4 | | |
|---|---|---|---|---|---|---|---|---|
| 2θ | d | I/Io (100×) | 2θ | d | I/Io (100×) | 2θ | d | I/Io (100×) |
| 17.4 | 5.10 | 2 | 16.5 | 5.37 | 1 | 17.8 | 4.98 | 7 |
| 17.85 | 4.97 | 5 | 17.2 | 5.16 | 3 | 18.3 | 4.85 | 2 |
| 18.4 | 4.82 | 3 | 17.7 | 5.01 | 5 | 19.2 | 4.62 | 6 |
| 19.4 | 4.58 | 5 | 18.2 | 4.87 | 3 | 20.0 | 4.44 | 4 |
| 20.05 | 4.43 | 3 | 19.2 | 4.63 | 6 | 20.4 | 4.35 | 6 |
| 20.5 | 4.33 | 6 | 20.0 | 4.44 | (sh) | 20.8 | 4.27 | 10 |
| 20.95 | 4.24 | 7 | 20.3 | 4.37 | 9 | 21.8 | 4.08 | 3 |
| 22.0 | 4.04 | 3 | 20.8 | 4.27 | 9 | 22.2 | 4.00 | 9 |
| 22.3 | 3.99 | 7 | 21.8 | 4.08 | (sh) | 23.1 | 3.85 | 100 |
| 23.3 | 3.82 | 100 | 22.1 | 4.02 | 8 | 23.7 | 3.75 | 37 |
| 23.8 | 3.74 | 31 | 23.05 | 3.86 | 100 | 23.9 | 3.72 | 31 |
| 24.1 | 3.69 | 30 | 23.6 | 3.77 | 33 | 24.4 | 3.65 | 19 |
| 24.55 | 3.63 | 20 | 23.85 | 3.73 | 37 | 24.8 | 3.59 | 3 |
| 24.9 | 3.58 | 2 | 24.35 | 3.66 | 24 | 25.6 | 3.48 | (sh) |
| 26.05 | 3.42 | 9 | 24.6 | 3.62 | (sh) | 25.9 | 3.44 | 10 |
| 26.85 | 3.32 | 7 | 25.5 | 3.49 | (sh) | 26.6 | 3.35 | 8 |
| 27.0 | 3.30 | (sh) | 25.8 | 3.45 | 10 | 26.9 | 3.31 | (sh) |
| 27.6 | 3.23 | 2 | 26.6 | 3.35 | 9 | 27.4 | 3.25 | 3 |
| 28.2 | 3.16 | 2 | 26.8 | 3.33 | | 28.0 | 2.19 | 3 |
| 28.6 | 3.12 | 2 | 27.3 | 3.27 | 4 | 28.4 | 3.14 | 2 |
| 29.4 | 3.04 | 8 | 28.0 | 3.19 | 3 | 29.3 | 3.05 | 9 |
| 30.1 | 2.97 | 9 | 28.4 | 3.14 | 3 | 29.9 | 2.99 | 9 |
| 30.45 | 2.94 | 5 | 29.2 | 3.06 | 9 | 30.4 | 2.94 | 4 |
| 31.4 | 2.85 | 2 | 29.9 | 2.99 | 11 | 31.2 | 2.87 | 2 |
| 32.2 | 2.78 | 2 | 30.3 | 2.95 | 5 | 32.1 | 2.79 | 1 |
| 32.9 | 2.72 | 3 | 31.2 | 2.87 | 2 | 32.8 | 2.73 | 3 |
| 33.6 | 2.67 | 1 | 32.1 | 2.79 | 1 | 33.4 | 2.68 | 1 |
| 34.6 | 2.60 | 4 | 32.8 | 2.73 | 3 | 34.4 | 2.61 | 4 |
| 35.0 | 2.56 | 2 | 33.3 | 2.69 | 1 | 34.8 | 2.58 | 2 |
| 36.0 | 2.49 | 3 | 33.8 | 2.65 | 1 | 35.7 | 2.51 | 3 |

TABLE I (contd.)

| Example 1 | | | Example 3 | | | Example 4 | | |
|---|---|---|---|---|---|---|---|---|
| 2θ | d | I/Io (100×) | 2θ | d | I/Io (100×) | 2θ | d | I/Io (100×) |
| 36.2 | 2.48 | 4 | 34.4 | 2.61 | 4 | 36.0 | 2.49 | 5 |
| 36.8 | 2.44 | 1 | 34.8 | 2.58 | 2 | 36.7 | 2.45 | 2 |
| 37.4 | 2.40 | 2 | 35.8 | 2.51 | 3 | 37.2 | 2.42 | 3 |
| 37.7 | 2.39 | 3 | 36.1 | 2.49 | 4 | 37.5 | 2.40 | 3 |
| 38.5 | 2.34 | 1 | 37.5 | 2.40 | 3 | 38.2 | 2.36 | 1 |
| 39.3 | 2.29 | 1 | 38.5 | 2.34 | 1 | 38.7 | 2.33 | 1 |
| 41.2 | 2.19 | 1 | 41.0 | 2.20 | 1 | 39.1 | 2.30 | 1 |
| 41.8 | 2.16 | 1 | 41.7 | 2.17 | 1 | 40.4 | 2.03 | 1 |
| 42.9 | 2.11 | 1 | 42.8 | 2.11 | 1 | 41.0 | 2.20 | 1 |
| 43.7 | 2.07 | 1 | 43.7 | 2.07 | 1 | 41.6 | 2.17 | 1 |
| 44.1 | 2.05 | 1 | 45.2 | 2.01 | 9 | 42.8 | 2.11 | 1 |
| 45.4 | 2.00 | 7 | 45.5 | 1.99 | | 43.5 | 2.08 | 2 |
| 45.6 | 1.99 | 8 | 46.4 | 1.96 | 2 | 45.1 | 2.01 | 8 |
| 46.45 | 1.95 | 2 | 47.4 | 1.92 | 3 | 45.5 | 1.99 | 9 |
| 47.6 | 1.91 | 2 | 48.5 | 1.88 | 3 | 46.4 | 1.96 | 2 |
| 48.7 | 1.87 | 2 | 51.7 | 1.77 | 2 | 47.4 | 1.92 | 3 |
| 49.8 | 1.83 | 1 | 53.3 | 1.72 | 1 | 48.5 | 1.88 | 3 |
| 50.5 | 1.81 | 1 | 55.2 | 1.66 | 3 | 49.7 | 1.83 | 1 |
| 51.8 | 1.76 | 1 | | | | 51.7 | 1.77 | 2 |
| 53.4 | 1.72 | 1 | | | | 53.3 | 1.72 | 1 |
| 55.3 | 1.66 | 2 | | | | 55.1 | 1.67 | 2 |

TABLE II

| Example | Adsorbate | Kinetic diameter (Å) | Pressure (torr) | Temp. (°C) | Wt. % adsorbed |
|---|---|---|---|---|---|
| 1 | $O_2$ | 3.46 | 99.8 | −183 | 15.1 |
| | $O_2$ | 3.46 | 725.1 | −183 | 15.7 |
| | $H_2O$ | 2.65 | 4.6 | 24 | 2.8 |
| | $H_2O$ | 2.65 | 20.2 | 24 | 5.5 |
| | Benzene | 5.85 | 39.3 | 24 | 8.5 |
| | Cyclohexane | 6.0 | 60 | 24 | 0.88 |
| 3 | $O_2$ | 3.46 | 99.8 | −183 | 15.0 |
| | $O_2$ | 3.46 | 725.1 | −183 | 15.8 |
| | $H_2O$ | 2.65 | 4.6 | 24 | 2.8 |
| | $H_2O$ | 2.65 | 20.2 | 24 | 5.4 |
| | Benzene | 5.85 | 39.3 | 24 | 8.8 |
| | Cyclohexane | 6.0 | 60 | 24 | 2.40 |
| 4 | $O_2$ | 3.46 | 100 | −183 | 16.1 |
| | $O_2$ | 3.46 | 600 | −183 | 16.4 |
| | $H_2O$ | 2.65 | 4.6 | 25 | 1.4 |
| | $H_2O$ | 2.65 | 17.5 | 25 | 2.6 |
| | Cyclohexane | 6.0 | 60 | 25 | 0.83 |

## Claims

1. Process for preparing a crystalline aluminosilicate zeolite having a composition in terms of mole ratios of oxides of

$$wMO:Al_2O_3:xSiO_2:yH_2O:zR_2O$$

wherein M is an alkaline earth metal cation having an atomic number above 12, R is an alkylammonium cation, w is about 0.1 to 2.0, x is about 10 to 190, y is about 0 to 40, and z is about 0.5 to 5.0, said zeolite having the X-ray powder diffraction pattern containing at least the d-spacings set forth in Table A, which comprises:

(a) providing a substantially alkali metal free reaction mixture having a composition in terms of mole ratios of oxides as follows:

(i) about 10 to 190 moles of $SiO_2$ per mole of $Al_2O_3$;
(ii) about 0.04 to 0.5 mole of MO per mole of $SiO_2$;
(iii) about 20 to 600 moles of $H_2O$ per mole MO;
(iv) about 1.0 to 10.0 moles of $R_2O$ per mole of $Al_2O_3$;

wherein M is an alkaline earth metal cation having an atomic number above 12 and R is an alkylammonium cation; and

(b) maintaining said mixture at a temperature of from about 100°C to about 200°C until said zeolite is formed.

2. The method of preparing a zeolite according to claim 1 wherein said alkylammonium cation, R, is tetrapropylammonium.

3. The method for preparing a zeolite according to claim 1 wherein said alkaline earth metal cation, M, is selected from the group containing barium, calcium and strontium.

4. The method for preparing a zeolite according to claim 1 wherein said mixture has a composition in terms of mole ratios of oxides as follows:

(a) about 30 to 90 moles of $SiO_2$ per mole of $Al_2O_3$;
(b) about 0.08 to 0.25 moles of MO per mole of $SiO_2$;
(c) about 80 to 500 moles of $H_2O$ per mole of MO; and
(d) about 1.0 to 2.0 moles of $R_2O$ per mole of $Al_2O_3$.

**Patentansprüche**

1. Verfahren zur Herstellung eines kristallinen zeolithischen Alumosilikats der durch die molaren Verhältnisse der Oxide ausgedrückten Zusammensetzung

$$wMO:Al_2O_3:xSiO_2:yH_2O:zR_2O$$

worin M ein Kation eines Erdalkalimetalls einer Ordnungszahl von größer als 12 und R ein Alkylammoniumkation bedeuten, w zwischen etwa 0,1 und 2,0, x zwischen etwa 10 und 190, y zwischen etwa 0 und 40 und z zwischen etwa 0,5 und 5,0 liegen, wobei der genannte Zeolith ein Pulver-Röntgenbeugungsdiagramm besitzt, das mindestens die d-Abstände, die in Tabelle A angegeben sind, zeigt, darin bestehend:

(a) daß man eine praktisch alkalifreie Reaktionsmischung der folgenden Zusammensetzung, ausgedrückt durch die molaren Verhältnisse der Oxide, bereitstellt:
(i) etwa 10 bis 190 Mol $SiO_2$ pro Mol $Al_2O_3$
(ii) etwa 0,04 bis 0,5 Mol MO pro Mol $SiO_2$
(iii) etwa 20 bis 600 Mol $H_2O$ pro Mol MO
(iv) etwa 1,0 bis 10,0 Mol $R_2O$ pro Mol $Al_2O_3$

worin M ein Kation eines Erdalkalimetalls einer Ordnungszahl größer als 12 und R ein Alkylammoniumkation bedeuten, und

(b) daß man die genannte Mischung auf einer Temperatur zwischen etwa 100 und etwa 200°C hält bis sich der genannte Zeolith gebildet hat.

2. Verfahren zur Herstellung eines Zeolithen nach Anspruch 1, wobei das genannte Alkylammoniumkation R das Tetrapropylammoniumkation bedeutet.

3. Verfahren zur Herstellung eines Zeolithen nach Anspruch 1, wobei das genannte Erdalkalimetallkation M aus der Gruppe von Barium, Calcium und Strontium ausgewählt wird.

4. Verfahren zur Herstellung eines Zeolithen nach Anspruch 1, wobei die genannte Mischung folgende Zusammensetzung hat, ausgedrückt durch die molaren Verhältnisse der Oxide:
a) etwa 30 bis 90 Mol $SiO_2$ pro Mol $Al_2O_3$
b) etwa 0,08 bis 0,25 Mol MO pro Mol $SiO_2$
c) etwa 80 bis 500 Mol $H_2O$ pro Mol MO und
d) etwa 1,0 bis 2,0 Mol $R_2O$ pro Mol $Al_2O_3$.

**Revendications**

1. Procédé de préparation d'un aluminosilicate cristallin zéolitique ayant pour composition, exprimée d'après les rapports molaires des oxydes:

$$wMO:Al_2O_3:xSiO_2:yH_2O:zR_2O$$

où M est un cation de métal alcalino-terreux dont le nombre atomique est supérieur à 12, R est un cation alkylammonium, w a une valeur d'environ 0,1 à 2,0, x a une valeur d'environ 10 à 190, y a une valeur d'environ 0 à 40, et z a une valeur d'environ 0,5 à 5,0, ladite zéolite ayant un diagramme de diffraction des rayons X, sous forme de poudre, contenant au moins les espacements d indiqués sur le Tableau A, qui consiste:

(a) à prendre un mélange réactionnel pratiquement dépourvu de métal alcalin, ayant la composition suivante, exprimée d'après les rapports molaires d'oxydes:
(i) environ 10 à 190 moles de $SiO_2$ par mole de $Al_2O_3$;
(ii) environ 0,04 à 0,5 mole de MO par mole de $SiO_2$;
(iii) environ 20 à 600 moles de $H_2O$ par mole de MO;
(iv) environ 1,0 à 10,0 moles de $R_2O$ par mole de $Al_2O_3$;

dans laquelle M représente un cation de métal alcalino-terreux ayant un nombre atomique supérieur à 12, et R est un cation alkylammonium; et

(b) à maintenir ledit mélange à une température d'environ 100 à environ 200°C jusqu'à ce que ladite zéolite soit formée.

2. Procédé de préparation d'une zéolite suivant la revendication 1, dans lequel ledit cation alkylammonium R est le cation tétrapropylammonium.

3. Procédé de préparation d'une zéolite suivant la revendication 1, dans lequel ledit cation M de métal alcalino-terreux est choisi entre le baryum, le calcium et le strontium.

4. Procédé de préparation d'une zéolite suivant la revendication 1, dans lequel le mélange a la composition suivante, exprimée d'après les rapports molaires d'oxydes:
(a) environ 30 à 90 moles de $SiO_2$ par mole de $Al_2O_3$;
(b) environ 0,08 à 0,25 mole de MO par mole de $SiO_2$;
(c) environ 80 à 500 moles de $H_2O$ par mole de MO; et
(d) environ 1,0 à 2,0 moles de $R_2O$ par mole de $Al_2O_3$.